# FASCICULE DE BREVET EUROPEEN

(11) **EP 2 939 776 B1**
(45) Date de publication et mention de la délivrance du brevet: **13.06.2018**
(21) Numéro de dépôt: 15163210.6
(22) Date de dépôt: 10.04.2015
(51) Int. Cl.: B23C 3/30, B23C 5/16, B23C 3/00, B23Q 1/42

(54) **DISPOSITIF D'USINAGE EN SURFACE D'UNE STRUCTURE ALVEOLAIRE**
VORRICHTUNG ZUR OBERFLÄCHENBEARBEITUNG EINER WABENSTRUKTUR
DEVICE FOR MACHINING THE SURFACE OF A CELLULAR STRUCTURE

(30) Priorité: 28.04.2014 FR 1453803
(43) Date de publication de la demande: 04.11.2015
(73) Titulaire: AIRBUS OPERATIONS (S.A.S), 31060 Toulouse (FR)
(72) Inventeur: De Mattia, Denis, 44115 BASSE GOULAINE (FR)
(74) Mandataire: Sarraméa, Claude

(56) Documents cités:
- EP-A1- 1 112 796
- DE-A1-102004 027 032
- DE-U- 1 886 766
- US-A1- 2003 039 517
- US-A1- 2012 142 257

## Description

La présente invention se rapporte à un dispositif d'usinage en surface d'une structure alvéolaire.

Une structure alvéolaire comprend des cellules tubulaires juxtaposées avec des sections régulières, disposées selon des alignements juxtaposés. Selon un mode de réalisation, la structure alvéolaire est dite en nids d'abeilles et chaque cellule a une section hexagonale.

Quel que soit le motif, la structure alvéolaire comprend des cloisons qui séparent les cellules et une pluralité de noeuds, chacun d'eux correspondant à l'arête commune entre plusieurs cloisons. Dans le cas d'une structure alvéolaire en nids d'abeilles, les noeuds sont disposés au niveau des sommets des formes hexagonales et chaque noeud correspond à l'arête commune de trois cloisons.

Chaque cellule tubulaire a deux extrémités qui correspondent aux bords libres des cloisons. Les premières extrémités des cellules tubulaires forment une première surface de la structure alvéolaire et les secondes extrémités forment une seconde surface de la structure alvéolaire.

Pour certaines applications, il est nécessaire de réaliser une rainure au niveau d'au moins une surface de la structure alvéolaire pour faire communiquer certaines cellules entre elles, notamment pour obtenir une fonction de drainage dans des structures alvéolaires utilisées pour le traitement acoustique et disposées au niveau d'une entrée d'air d'une nacelle d'avion. Ainsi, chaque cloison sécante avec la rainure comprend une découpe qui doit être positionnée de préférence à équidistance des noeuds reliés par ladite cloison.

Un dispositif selon le préambule de la revendication 1 pour usiner une rainure sur une surface d'une structure alvéolaire est décrit dans le document EP 1 112 796 A1. Un tel dispositif comprend une tête d'usinage qui supporte une scie circulaire montée sur un arbre de sortie d'un moteur et deux roues de guidage disposées de part et d'autre de la scie circulaire qui peuvent pivoter librement par rapport à l'arbre de sortie du moteur. Les roues de guidage et la scie sont fixes selon l'axe de l'arbre de sortie du moteur.

Les roues de guidage et la scie circulaire sont coaxiales et la scie circulaire a un rayon supérieur à celui des roues de guidage, la différence de rayon étant approximativement égale à la profondeur de la rainure.

Pour assurer le guidage, chaque roue de guidage comprend une série de picots uniformément répartis sur la périphérie de la roue de guidage, lesdits picots étant disposés dans un plan perpendiculaire à l'arbre de sortie du moteur. Chaque picot a une forme ajustée à une cellule tubulaire. En complément, le diamètre de la roue de guidage et le pas des picots sont ajustés pour que les roues de guidage roulent sans glissement sur la surface de la structure alvéolaire, les picots pénétrant successivement dans les cellules tubulaires.

La scie circulaire est en position médiane par rapport aux deux séries de picots.

Pour réaliser la rainure, la tête d'usinage se déplace au-dessus de la surface de la structure alvéolaire selon une direction qui correspond à la direction de la rainure à réaliser, l'arbre de sortie du moteur étant perpendiculaire à ladite direction. Lorsque les roues de guidage roulent sur la surface de la structure alvéolaire, les picots pénètrent dans les cellules et les roues de guidage sont positionnées par rapport auxdites cellules grâce aux picots. La scie circulaire étant immobile selon l'axe de l'arbre de sortie du moteur par rapport aux roues de guidage, elle est automatiquement correctement positionnée par rapport aux cellules tubulaires.

En pratique, le dispositif d'usinage décrit dans le document EP 1 112 796 A1 permet de positionner correctement l'encoche de chaque cloison traversée par la rainure si les cellules tubulaires de la structure alvéolaire sont correctement alignées.

Cependant, la production des structures alvéolaires peut générer des défauts d'alignement des cellules, ayant pour origine par exemple une hétérogénéité de l'expansion de la structure.

Si les défauts d'alignement sont trop importants, les picots d'une première roue de guidage ne peuvent pas être introduits correctement dans les cellules simultanément aux picots de la seconde roue de guidage, sans déformation locale de la structure alvéolaire. Dans ce cas, la scie circulaire peut ne pas être correctement positionnée en tout point à équidistance de la ligne des cellules situées à sa droite (suivie par les picots de la première roue de guidage située à droite) et de la ligne des cellules situées à sa gauche (suivie par les picots de la seconde roue de guidage située à gauche). Par conséquent, la rainure peut être déportée latéralement jusqu'à interférer avec les noeuds. Ce déport latéral est également accentué en raison d'un phénomène de talonnage de la scie circulaire qui tend également à augmenter la largeur de la rainure.

Or, si un noeud est affecté par la rainure, la résistance à la compression de la structure alvéolaire est grandement affectée au droit de ce noeud.

Pour remédier à ce problème, les tolérances relatives au critère d'alignement des cellules de la structure alvéolaire sont resserrées pour que les cellules disposées de part et d'autre de la rainure à réaliser soient correctement alignées.

Cependant, ce resserrement des tolérances conduit à augmenter les coûts des structures alvéolaires.

Aussi, la présente invention vise à améliorer le dispositif décrit dans le document EP 1 112 796 A1 pour lui permettre d'usiner une rainure dans une structure alvéolaire avec des tolérances relatives au critère d'alignement des cellules moins resserrées que celles requises par le dispositif de l'art antérieur, la rainure réalisée n'affectant pas les noeuds de ladite structure.

A cet effet, l'invention a pour objetun dispositif d'usinage d'une rainure sur une surface d'une structure alvéolaire, ledit dispositif comprenant les caractéristiques de la revendication 1, à savoir une tête d'usinage qui comprend un outil rotatif selon un axe outil, deux roues de guidage disposées de part et d'autre de l'outil rotatif, chaque roue de guidage comprenant une pluralité de picots configurés et positionnés de manière à pénétrer dans les cellules d'un alignement de la structure alvéolaire lorsque ladite roue de guidage roule sur la surface de la structure alvéolaire, et une liaison entre le châssis et au moins une roue de guidage qui autorise un degré de liberté selon une direction latérale parallèle à l'axe outil afin que ladite roue de guidage soit mobile par rapport à l'outil rotatif selon la direction latérale.

Selon cette configuration, l'écartement entre les roues de guidage peut varier et s'adapter automatiquement aux éventuels défauts d'alignement des cellules.

Avantageusement, la tête d'usinage comprend une liaison entre le châssis et chaque roue de guidage qui autorise un degré de liberté selon la direction latérale afin que les deux roues de guidage soient mobiles par rapport à l'outil rotatif selon la direction latérale.

De préférence, la tête d'usinage comprend, pour chaque roue de guidage, un support de roue, une liaison pivotante intercalée entre la roue de guidage et le support de roue correspondant.

Selon une caractéristique, la tête d'usinage comprend au moins un rail de guidage qui s'étend selon la direction latérale et qui est fixe par rapport au châssis, les supports de roue étant mobiles le long dudit rail de guidage. Selon un mode de réalisation, le rail de guidage a une section en forme de T inversé et en ce que chaque support de roue a une rainure avec une section en T qui est identique au jeu de glissement près à la section en forme de T du rail de guidage.

Selon une caractéristique de l'invention, la tête d'usinage comprend un mécanisme de synchronisation des mouvements des roues de guidage afin de les rendre symétriques par rapport à l'outil rotatif.

De préférence, le mécanisme de synchronisation comprend une roue dentée et chaque roue de guidage est montée pivotante sur un support de roue qui comprend une crémaillère qui engrène avec la roue dentée et qui s'étend selon une direction parallèle à la direction latérale, les crémaillères étant parallèles et disposées en vis-à-vis de part et d'autre de la roue dentée.

Selon une caractéristique de l'invention, l'axe outil et les axes de roue sont décalés, l'axe outil étant plus proche de la surface de la structure alvéolaire que les axes de roue.

De préférence, l'outil rotatif a un diamètre extérieur inférieur au diamètre extérieur des roues de guidage.

D'autres caractéristiques et avantages ressortiront de la description qui va suivre de l'invention, description donnée à titre d'exemple uniquement, en regard des dessins annexés sur lesquels :
- la figure 1A est une vue de dessus d'une structure alvéolaire sans défaut d'alignement comprenant une rainure réalisée avec un dispositif d'usinage équipé d'une tête d'usinage conforme à l'invention,
- la figure 1B est une vue de dessus d'une structure alvéolaire avec un défaut d'alignement comprenant une rainure réalisée avec un dispositif d'usinage équipé d'une tête d'usinage conforme à l'invention
- la figure 2 est une vue en perspective d'une tête d'usinage qui illustre l'invention,
- la figure 3 est une coupe longitudinale de la tête d'usinage illustrée sur la figure 2,
- la figure 4 est un schéma illustrant la cinématique des supports de roue de la tête d'usinage qui illustre une variante de l'invention,
- la figure 5 est une vue de côté de l'outil rotatif de la tête d'usinage de la figure 2 en prise avec une structure alvéolaire.

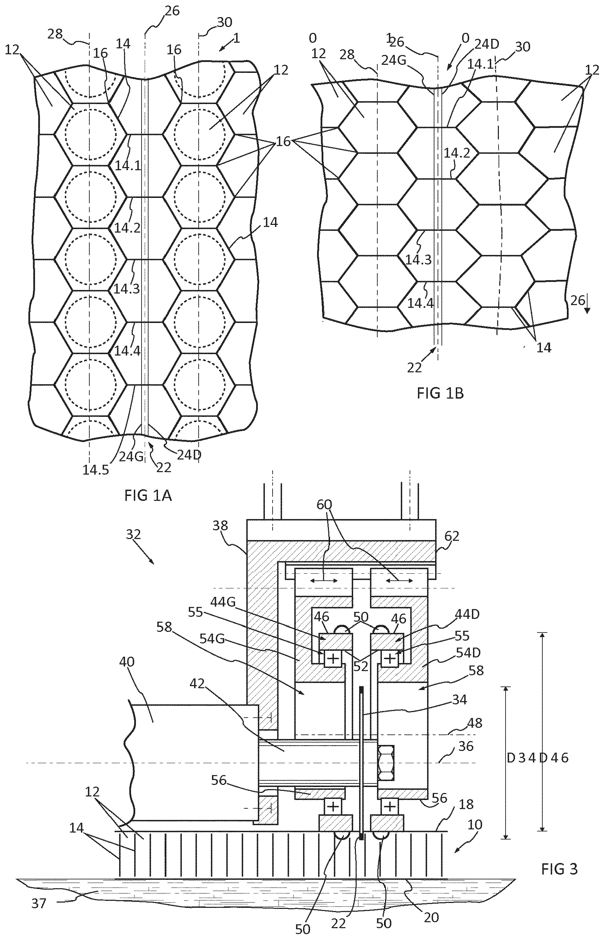

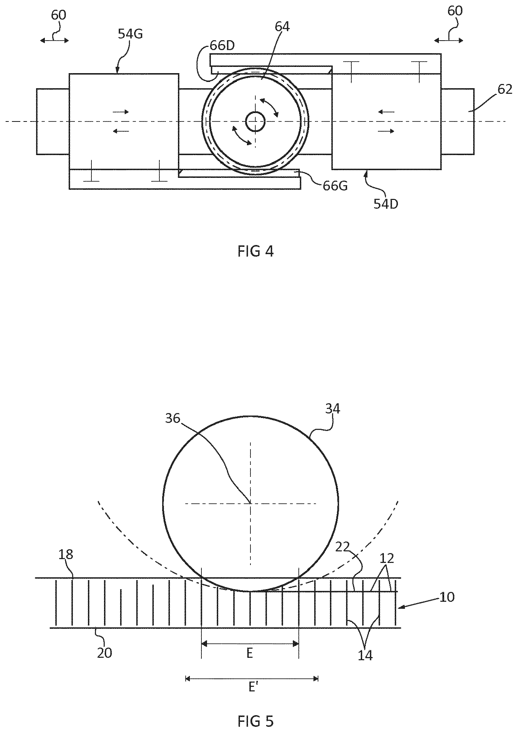

Sur les figures 1A et 1B, on a représenté une structure alvéolaire 10 comprenant une pluralité de cellules 12 tubulaires séparées par des cloisons 14 qui ont des arêtes communes appelées noeuds 16. Chaque cellule 12 débouche au niveau d'une première extrémité et d'une seconde extrémité. Les premières extrémités des cellules forment une première surface 18 de la structure alvéolaire et les secondes extrémités des cellules forment une seconde surface 20 (visibles sur les figures 3 et 5).

Selon un mode de réalisation illustré sur les figures 1A et 1B, la structure alvéolaire est de type en nids d'abeilles et les cellules 12 ont une section hexagonale. La structure alvéolaire ainsi que son procédé de fabrication ne sont pas décrits car ils sont connus de l'homme du métier.

Une rainure 22 est réalisée sur l'une des surfaces, par exemple la surface 18. Cette rainure 22 est sécante avec une série de cloisons parallèles 14.1, 14.2, 14.n et forme au niveau de chaque cloison sécante une découpe carrée ou rectangulaire avec deux bords, un bord gauche 24G et un bord droit 24D. L'invention n'est pas limitée à cette section carrée ou rectangulaire pour la rainure 22. Des formes plus complexes pourraient être envisagées. Pour chaque cloison sécante, la rainure 22 doit être disposée à équidistance des noeuds reliés par ladite cloison.

Comme illustré sur les figures 1A et 1B, la rainure 22 s'étend selon une direction 26 (matérialisée par un trait d'axe) qui correspond à un premier alignement de cellules.

La structure alvéolaire comprend de part et d'autre du premier alignement de cellules, un alignement gauche de cellules 28 et un alignement droit de cellules 30.

En l'absence de défaut d'alignement, les alignements de cellules sont régulièrement espacés, comme illustré sur la figure 1A.

Sur la figure 1B, on a représenté un défaut d'alignement. Dans ce cas, les alignements de cellules 26, 28, 30 ne sont pas régulièrement espacés.

Pour que la rainure 22 n'interfère pas avec les noeuds 16 et soit approximativement centrée entre les noeuds des cloisons sécantes 14.1 à 14.n, la rainure 22 doit être positionnée à équidistance des alignements gauche 28 et droit 30, comme illustré sur les figures 1A et 1B, même en présence d'un défaut d'alignement.

Un dispositif d'usinage est utilisé pour réaliser la rainure 22.

Ce dispositif d'usinage comprend un bâti, un porte-outil mobile par rapport au bâti, une tête d'usinage 32 mobile par rapport au porte-outil, une première chaine cinématique pour contrôler les déplacements du porte-outil et une seconde chaine cinématique entre le porte-outil et la tête d'usinage.

La tête d'usinage 32 comprend un outil rotatif 34 qui tourne autour d'un axe outil 36 orienté perpendiculairement à la direction 26 de la rainure 22.

La première chaine cinématique permet notamment de déplacer le porte-outil selon la direction 26 de la rainure 22.

La seconde chaine cinématique autorise au moins un degré de liberté entre la tête d'usinage et le porte-outil, notamment une première translation parallèle à l'axe outil 36 (perpendiculaire à la direction 26 de la rainure). De préférence, la seconde chaine cinématique autorise plusieurs degrés de liberté, une première translation parallèle à l'axe outil 36 (perpendiculaire à la direction 26 de la rainure), une seconde translation perpendiculaire à la surface 18 de la structure alvéolaire, une première rotation selon un premier axe de rotation perpendiculaire à la surface 18 de la structure alvéolaire et une seconde rotation selon un second axe de rotation parallèle à la direction 26 de la rainure 22. Ainsi, ces degrés de liberté permettent à la tête d'usinage 32 de se positionner correctement par rapport à la surface 18 de la structure alvéolaire même si la surface n'est pas parfaitement plane.

Le dispositif d'usinage comprend également une table d'usinage 37 (visible sur la figure 3) sur laquelle la structure alvéolaire 10 à usiner est bridée.

La table d'usinage, le bâti, le porte-outil, les première et seconde chaines cinématiques ne sont pas plus décrits car ils peuvent être identiques à ceux décrits dans le document EP-1.112.796.

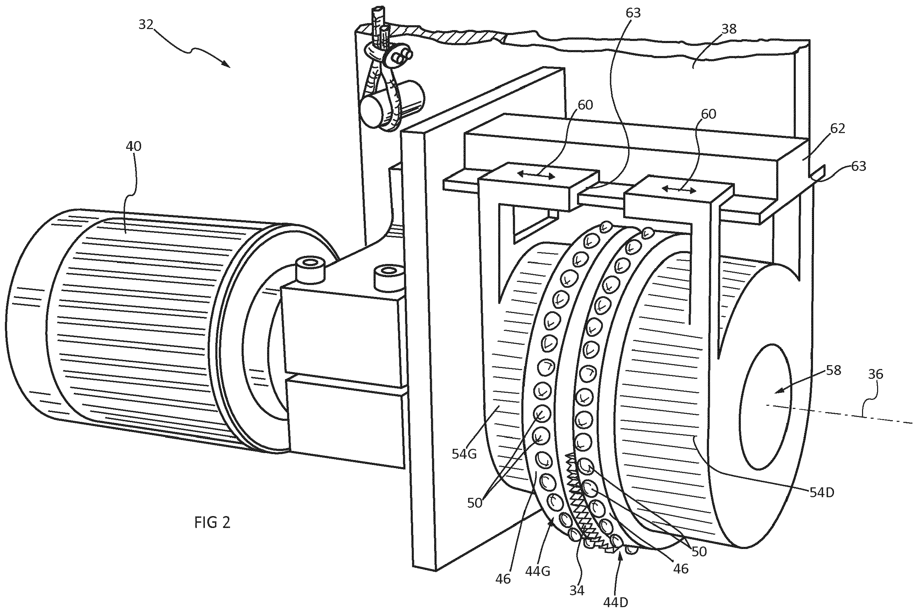

Comme illustré sur les figures 2 et 3, la tête d'usinage 32 comprend un châssis 38 relié par la seconde chaine cinématique au porte outil, une motorisation 40 solidaire du châssis 38 avec un arbre de sortie 42 ayant pour axe l'axe outil 36, et un outil rotatif 34 solidarisé par une liaison démontable à l'arbre de sortie 42. De manière générale, l'outil rotatif 34 est relié au châssis 38 par une liaison qui autorise la rotation dudit outil rotatif 34 autour de l'axe outil 36 mais qui immobilise l'outil rotatif 34 par rapport au châssis 38 selon une direction parallèle à l'axe outil 36.

L'outil rotatif 34 est une meule, une scie circulaire ou autre. La forme de l'outil rotatif 34 est adaptée à la section de la rainure 22.

La tête d'usinage 32 comprend également deux roues de guidage, une première roue de guidage 44G disposée à gauche de l'outil rotatif 34 et une seconde roue de guidage 44D disposée à droite de l'outil rotatif 34.

Chaque roue de guidage 44G ou 44D comprend un axe de rotation appelé axe de roue 48, une surface extérieure 46 cylindrique et une pluralité de picots 50 réparties de manière régulière sur la périphérie de la surface extérieure 46, dans un plan perpendiculaire à l'axe de roue 48. Les axes de roue 48 et l'axe outil 36 sont parallèles et perpendiculaire à la direction 26 de la rainure 22 à réaliser.

Les dimensions et les formes des picots, leurs pas sont déterminés en fonction des formes et des dimensions des cellules 12 de la structure alvéolaire de manière à ce que lorsque les roues de guidage roulent chacune sur la surface de la structure alvéolaire 10 selon un alignement de cellules, les picots pénètrent de manière successives dans les cellules dudit alignement.

Selon un mode de réalisation, chaque roue de guidage 44D ou 44G se présente sous la forme d'une bague délimitée à l'extérieur par la surface extérieure 46 et à l'intérieur par une surface intérieure 52 cylindrique, la surface extérieure 46 et la surface intérieure 52 étant coaxiales.

De préférence, les roues de guidage 44D et 44G sont identiques et coaxiales.

La première roue de guidage 44G est montée sur un premier support de roue 54G et la seconde roue de guidage 44D est montée sur un second support de roue 54D.

Pour chaque roue de guidage, une liaison pivotante 55 est intercalée entre la roue de guidage et son support de roue de manière à autoriser un mouvement de rotation de chaque roue de guidage par rapport à l'axe de roue 48. Pour chaque roue de guidage, la liaison pivotante 55 immobilise en translation selon la direction de l'axe de roue 48 la roue de guidage par rapport à son support de roue.

Selon un mode de réalisation, chaque support de roue 54D ou 54G comprend une portée cylindrique 56 sur laquelle est montée pivotante la roue de guidage correspondante. La liaison pivotante 55 comprend un moyen de roulement tel qu'un roulement, une bague à aiguille par exemple, intercalé entre chaque portée cylindrique 56 et la surface intérieure 52 de la roue de guidage correspondante pour favoriser la rotation sans frottement des roues de guidage sur les portées cylindriques 56.

Au moins un support de roue intercalé entre la motorisation 40 et l'outil rotatif 34 comprend un trou de passage 58 pour laisser passer l'arbre de sortie 42 de la motorisation 40. De préférence, chaque support de roue 54D ou 54G comprend un trou de passage 58.

Selon une caractéristique de l'invention, l'axe outil 36 et les axes de roue 48 sont décalés, l'axe outil 36 étant plus proche de la surface 18 de la structure alvéolaire 10 que les axes de roue 48.

Selon l'invention, en raison du décalage des axes 36 et 48, l'outil rotatif 34 a un diamètre extérieur D34 inférieur au diamètre extérieur D46 des roues de guidage 44D, 44G. Ainsi, il est possible de choisir un diamètre extérieur D34 pour l'outil rotatif inférieur à 0,75 fois le diamètre extérieur D46 des roues de guidage 44D, 44G.

Comme illustré sur la figure 5, l'outil rotatif 34 conforme à l'invention en trait fort a un engagement E avec la structure alvéolaire 10 nettement inférieur à l'engagement E' d'un outil rotatif de l'art antérieur en pointillé qui a un diamètre extérieur supérieur à celui des roues de guidage.

Cette configuration permet de réduire les phénomènes de talonnage à l'avant et à l'arrière de l'outil qui ont tendance à élargir les dimensions des découpes et à déporter latéralement (perpendiculairement à la direction 26 de la rainure) l'outil.

Les trous de passage 58 ont un diamètre suffisamment important pour loger l'arbre de sortie 42 qui est décalé par rapport aux axes de roue 48.

Selon une caractéristique de l'invention, au moins une roue de guidage 44D ou 44G est mobile par rapport à l'outil rotatif 34 et peut se déplacer selon une direction latérale 60 parallèle à l'axe outil 36 (soit perpendiculaire à la direction 26 de la rainure). Ainsi, la tête d'usinage comprend une liaison entre le châssis 38 de la tête d'usinage et au moins une roue de guidage mobile qui autorise un degré de liberté selon une direction latérale 60.

Selon cette configuration, l'écartement entre les roues de guidage 44D et 44G peut varier et s'adapter automatiquement aux éventuels défauts d'alignement des cellules.

De préférence, les deux roues de guidage 44D et 44G sont mobiles selon la direction latérale 60. Ainsi, la tête d'usinage comprend une liaison entre le châssis 38 de la tête d'usinage et chaque roue de guidage mobile qui autorise un degré de liberté selon une direction latérale 60.

Avantageusement, la tête d'usinage 32 comprend au moins un rail de guidage 62 qui s'étend selon la direction latérale 60 et qui est fixe par rapport au châssis 38 et les supports de roue 54G et 54D sont mobiles le long du rail de guidage 62. A cet effet, le rail de guidage 62 a des formes complémentaires à celles des supports de roue 54D et 54G.

Selon un mode de réalisation, le rail de guidage 62 a une section en forme de T inversé et chaque support de roue a une rainure 63 avec une section en T qui est identique au jeu de glissement près à la section en forme de T du rail. Ainsi, chaque support de roue 54D et 54G est suspendu au rail de guidage 62.

Le rail de guidage 62 et/ou les supports de roue 54D, 54G ont un revêtement qui favorise le glissement sans frottement des supports de roue le long du rail de guidage 62.

Avantageusement, comme illustré sur la figure 4, la tête d'usinage 32 comprend un mécanisme de synchronisation des mouvements des roues de guidage 44D et 44G afin de les rendre symétriques par rapport à l'outil rotatif 34. Ainsi, les roues de guidage 44D et 44G ont des mouvements selon la même direction latérale 60 mais avec des sens opposés.

Le mécanisme de synchronisation permet de positionner les roues de guidage toujours à équidistance de l'outil rotatif 34. Ainsi, lorsque l'écartement des roues de guidage 44D et 44G varie, l'outil rotatif 34 est toujours disposé en position médiane.

Selon un mode de réalisation illustré sur la figure 4, le mécanisme de synchronisation comprend une roue dentée 64 avec un axe de rotation perpendiculaire à l'axe outil 36 et à la direction 26 de la rainure et chaque support de roue 54D et 54G comprend une crémaillère 66D et 66G qui engrène avec la roue dentée 64 et qui s'étend selon une direction parallèle à la direction latérale 60 (qui est elle-même parallèle à l'axe outil 36), les crémaillères 66D et 66G étant parallèles et disposées en vis-à-vis de part et d'autre de la roue dentée 64. Ainsi, lorsque le support de roue 54G s'écarte de l'outil rotatif 34, la crémaillère 66G provoque la rotation de la roue dentée 64 dans le sens horaire. De manière simultanée, la rotation de la roue dentée 64 provoque la translation de la crémaillère 66D et du support de roue 54D qui s'écarte également de l'outil rotatif 34.

A contrario, lorsque le support de roue 54G se rapproche de l'outil rotatif 34, la crémaillère 66G provoque la rotation de la roue dentée 64 dans le sens antihoraire. De manière simultanée, la rotation de la roue dentée 64 provoque la translation de la crémaillère 66D et du support de roue 54D qui se rapproche également de l'outil rotatif 34.

Le principe de fonctionnement du dispositif d'usinage est maintenant décrit.

Comme illustré sur la figure 1B, pour réaliser la rainure 22, la première roue de guidage 44G doit suivre l'alignement gauche 28 qui est rectiligne et la seconde roue de guidage 44D doit suivre l'alignement droit 30 qui n'est pas rectiligne en raison d'un défaut d'alignement. Lorsque les roues de guidage vont rouler sur la surface 18 de la structure alvéolaire les picots de la première roue de guidage 44G vont pénétrer successivement dans les cellules de l'alignement gauche 28 et les picots de la seconde roue de guidage 44D vont pénétrer successivement dans les cellules de l'alignement droit 30.

Comme illustré sur la figure 1B, l'écartement entre les alignements gauche et droit augmente lorsque la tête d'usinage se déplace selon le sens de la direction 26.

Les picots 50 de la seconde roue de guidage 44D vont suivre la forme courbe de l'alignement droit 30 et vont provoquer l'écartement de la seconde roue 44D par rapport à l'outil rotatif 34. Cet écartement est possible du fait que le support de roue 54D est mobile en translation selon la direction latérale 60. Grâce au mécanisme de synchronisation et du fait que le support de roue 54G est également mobile en translation selon la direction latérale 60, le support de roue 54G et la roue de guidage 44G vont également s'écarter de l'outil rotatif 34. Grâce au mécanisme de synchronisation, l'outil rotatif 34 est toujours en position médiane quel que soit l'écartement entre les deux roues de guidage 44D et 44G.

Si l'alignement gauche 18 est rectiligne, le déplacement de roue de guidage 44G va être compensé par un léger déplacement selon la direction latérale 60 de la tête d'usinage par rapport au porte-outil qui est possible grâce au degré de liberté prévu au niveau de la seconde chaine cinématique.

L'invention procure les avantages suivants :
- Les roues de guidage ne sont plus contraintes pour engrener dans une structure alvéolaire avec un défaut d'alignement, l'écartement entre les roues de guidage pouvant librement s'adapter à la configuration de la structure alvéolaire.
- L'outil rotatif est auto-positionné dans un plan symétrique aux roues de guidage si bien qu'il est toujours disposé correctement par rapport à la cloison à découper et n'endommage pas les noeuds de la structure alvéolaire.
- L'engagement réduit de l'outil rotatif dans la structure alvéolaire minimise les phénomènes de talonnage et limite les risques d'élargissement de la rainure.

## Revendications

1. Dispositif d'usinage d'une rainure sur une surface (18) d'une structure alvéolaire qui comprend une pluralité de cellules disposées selon des alignements, la rainure étant orientée selon une direction (26) correspondant à un premier alignement de cellules, ledit dispositif comprenant une tête d'usinage (32) qui comprend un châssis (38), un outil rotatif (34) selon un axe outil (36) perpendiculaire à la direction (26) de la rainure, une première roue de guidage (44G) disposée à gauche de l'outil rotatif (34), une seconde roue de guidage (44D) disposée à droite de l'outil rotatif, chaque roue de guidage (44G, 44D) comprenant un axe de roue (48) parallèle à l'axe outil (36), une surface extérieure (46) avec une pluralité de picots (50) configurés et positionnés de manière à pénétrer dans les cellules d'un alignement de la structure alvéolaire lorsque ladite roue de guidage roule sur la surface de la structure alvéolaire, **caractérisé en ce que** la tête d'usinage (32) comprend une liaison entre le châssis (38) et au moins une roue de guidage (44G, 44D) qui autorise un degré de liberté selon une direction latérale (60) parallèle à l'axe outil (36) afin que ladite roue de guidage (44G, 44D) soit mobile par rapport à l'outil rotatif (34) selon la direction latérale (60).

2. Dispositif d'usinage selon la revendication 1, **caractérisé en ce que** la tête d'usinage (32) comprend une liaison entre le châssis (38) et chaque roue de guidage (44G, 44D) qui autorise un degré de liberté selon la direction latérale (60) afin que les deux roues de guidage (44G, 44D) soient mobiles par rapport à l'outil rotatif (34) selon la direction latérale (60).

3. Dispositif d'usinage selon la revendication 1 ou 2, **caractérisé en ce que** la tête d'usinage (32) comprend, pour chaque roue de guidage (44G, 44D), un support de roue (54G, 54D), une liaison pivotante (55) intercalée entre la roue de guidage (44G, 44D) et le support de roue (54G, 54D) correspondant.

4. Dispositif d'usinage selon la revendication 3, **caractérisé en ce que** la tête d'usinage (32) comprend au moins un rail de guidage (62) qui s'étend selon la direction latérale (60) et qui est fixe par rapport au châssis (38), les supports de roue (54G, 54D) étant mobiles le long dudit rail de guidage (62).

5. Dispositif d'usinage selon la revendication 4, **caractérisé en ce que** le rail de guidage (62) a une section en forme de T inversé et **en ce que** chaque support de roue (54G, 54D) a une rainure avec une section en T qui est identique au jeu de glissement près à la section en forme de T du rail de guidage (62).

6. Dispositif d'usinage selon l'une des revendications précédentes, **caractérisé en ce que** la tête d'usinage (32) comprend un mécanisme de synchronisation des mouvements des roues de guidage (44D, 44G) afin de les rendre symétriques par rapport à l'outil rotatif (34).

7. Dispositif d'usinage selon la revendication 6, **caractérisé en ce que** le mécanisme de synchronisation comprend une roue dentée (64) et **en ce que** chaque roue de guidage (44D, 44G) est montée pivotante sur un support de roue (54D, 54G) qui comprend une crémaillère (66D, 66G) qui engrène avec la roue dentée (64) et qui s'étend selon une direction parallèle à la direction latérale (60), les crémaillères (66D, 66G) étant parallèles et disposées en vis-à-vis de part et d'autre de la roue dentée (64).

8. Dispositif d'usinage selon l'une des revendications précédentes, **caractérisé en ce que** l'axe outil (36) et les axes de roue (48) sont décalés, l'axe outil (36) étant plus proche de la surface (18) de la structure alvéolaire (10) que les axes de roue (48).

9. Dispositif d'usinage selon la revendication 8, **caractérisé en ce que** l'outil rotatif (34) a un diamètre extérieur (D34) inférieur au diamètre extérieur (D46) des roues de guidage (44D, 44G).

10. Dispositif d'usinage selon la revendication 8 ou 9, **caractérisé en ce qu'**il comprend un support de roue (54D, 54G) pour chaque roue de guidage (44D, 44G), au moins un support de roue intercalé entre l'outil rotatif (34) et une motorisation (40) prévue pour entrainer en rotation l'outil rotatif (34) comprenant un trou de passage (58).

## Patentansprüche

1. Vorrichtung zur Bearbeitung einer Nut auf einer Oberfläche (18) einer Wabenstruktur, welche eine Vielzahl von Zellen umfasst, die in Reihen angeordnet sind, wobei die Nut in einer Richtung (26) ausgerichtet ist, die einer ersten Reihe von Zellen entspricht, wobei die Vorrichtung einen Bearbeitungskopf (32) umfasst, welcher ein Gestell (38), ein um eine zur Richtung (26) der Nut senkrechte Werkzeugachse (36) rotierendes Werkzeug (34), ein links von dem rotierenden Werkzeug (34) angeordnetes erstes Führungsrad (44G), ein rechts von dem rotierenden Werkzeug angeordnetes zweites Führungsrad (44D), wobei jedes Führungsrad (44G, 44D) eine zu der Werkzeugachse (36) parallele Radachse (48), und eine Außenfläche (46) mit einer Vielzahl von Dornen (50), die so ausgebildet und positioniert sind, dass sie in die Zellen einer Reihe der Wabenstruktur eindringen, wenn das Führungsrad auf der Oberfläche der Wabenstruktur rollt, umfasst, **dadurch gekennzeichnet, dass** der Bearbeitungskopf (32) eine Verbindung zwischen dem Gestell (38) und wenigstens einem Führungsrad (44G, 44D) umfasst, welche einen Freiheitsgrad in einer zu der Werkzeugachse (36) parallelen seitlichen Richtung (60) ermöglicht, damit das Führungsrad (44G, 44D) in Bezug auf das rotierende Werkzeug (34) in der seitlichen Richtung (60) beweglich ist.

2. Vorrichtung zur Bearbeitung nach Anspruch 1, **dadurch gekennzeichnet, dass** der Bearbeitungskopf (32) eine Verbindung zwischen dem Gestell (38) und jedem Führungsrad (44G, 44D) umfasst, welche einen Freiheitsgrad in der seitlichen Richtung (60) ermöglicht, damit die beiden Führungsräder (44G, 44D) in Bezug auf das rotierende Werkzeug (34) in der seitlichen Richtung (60) beweglich sind.

3. Vorrichtung zur Bearbeitung nach Anspruch 1 oder 2, **dadurch gekennzeichnet, dass** der Bearbeitungskopf (32) für jedes Führungsrad (44G, 44D) einen Radträger (54G, 54D) umfasst, wobei eine Schwenkverbindung (55) zwischen dem Führungsrad (44G, 44D) und dem entsprechenden Radträger (54G, 54D) angeordnet ist.

4. Vorrichtung zur Bearbeitung nach Anspruch 3, **dadurch gekennzeichnet, dass** der Bearbeitungskopf (32) wenigstens eine Führungsschiene (62) umfasst, welche sich in der seitlichen Richtung (60) erstreckt und welche in Bezug auf das Gestell (38) fest ist, wobei die Radträger (54G, 54D) entlang der Führungsschiene (62) beweglich sind.

5. Vorrichtung zur Bearbeitung nach Anspruch 4, **dadurch gekennzeichnet, dass** die Führungsschiene (62) einen Querschnitt in Form eines umgekehrten "T" aufweist, und dadurch, dass jeder Radträger (54G, 54D) eine Nut mit einem T-förmigen Querschnitt aufweist, welcher bis auf das Gleitspiel dem T-förmigen Querschnitt der Führungsschiene (62) entspricht.

6. Vorrichtung zur Bearbeitung nach einem der vorhergehenden Ansprüche, **dadurch gekennzeichnet, dass** der Bearbeitungskopf (32) einen Mechanismus zur Synchronisation der Bewegungen der Führungsräder (44D, 44G), um sie symmetrisch in Bezug auf das rotierende Werkzeug (34) zu machen, umfasst.

7. Vorrichtung zur Bearbeitung nach Anspruch 6, **dadurch gekennzeichnet, dass** der Mechanismus zur Synchronisation ein Zahnrad (64) umfasst, und dadurch, dass jedes Führungsrad (44D, 44G) schwenkbar auf einem Radträger (54D, 54G) gelagert ist, welcher eine Zahnstange (66D, 66G) umfasst, die mit dem Zahnrad (64) in Eingriff steht und die sich in einer zu der seitlichen Richtung (60) parallelen Richtung erstreckt, wobei die Zahnstangen (66D, 66G) parallel sind und einander gegenüberliegend beiderseits des Zahnrads (64) angeordnet sind.

8. Vorrichtung zur Bearbeitung nach einem der vorhergehenden Ansprüche, **dadurch gekennzeichnet, dass** die Werkzeugachse (36) und die Radachsen (48) versetzt sind, wobei die Werkzeugachse (36) näher an der Oberfläche (18) der Wabenstruktur (10) verläuft als die Radachsen (48).

9. Vorrichtung zur Bearbeitung nach Anspruch 8, **dadurch gekennzeichnet, dass** das rotierende Werkzeug (34) einen Außendurchmesser (D34) aufweist, der kleiner als der Außendurchmesser (D46) der Führungsräder (44D, 44G) ist.

10. Vorrichtung zur Bearbeitung nach Anspruch 8 oder 9, **dadurch gekennzeichnet, dass** sie einen Radträger (54D, 54G) für jedes Führungsrad (44D, 44G) umfasst, wobei wenigstens ein Radträger, der zwischen dem rotierenden Werkzeug (34) und einem Antrieb (40), der dafür vorgesehen ist, das rotierende Werkzeug (34) drehend anzutreiben, angeordnet ist, ein Durchgangsloch (58) umfasst.

## Claims

1. Device for machining a slot in a surface (18) of a cellular structure that includes a plurality of cells arranged along alignments, the slot being oriented in a direction (26) corresponding to a first cell alignment, said device comprising a machining head (32) that includes a chassis (38), a rotary tool (34) rotating about a tool axis (36) perpendicular to the direction (26) of the slot, a first guide wheel (44G) arranged to the left of the rotary tool (34), a second guide wheel (44D) arranged to the right of the rotary tool, each guide wheel (44G, 44D) having a wheel axis (48) parallel to the tool axis (36), an external surface (46) with a plurality of teeth (50) configured and positioned such as to penetrate the cells in an alignment of the cellular structure when said guide wheel rolls over the surface of the cellular structure, **characterized in that** the machining head (32) includes a link between the chassis (38) and at least one guide wheel (44G, 44D) that enables a degree of freedom in the lateral direction (60) parallel to the tool axis (36) such that said guide wheel (44G, 44D) is movable in relation to the rotary tool (34) in the lateral direction (60).

2. Machining device according to Claim 1, **characterized in that** the machining head (32) includes a link between the chassis (38) and each guide wheel (44G, 44D) that enables a degree of freedom in the lateral direction (60) such that the two guide wheels (44G, 44D) are movable in relation to the rotary tool (34) in the lateral direction (60).

3. Machining device according to Claim 1 or 2, **characterized in that** the machining head (32) includes, for each guide wheel (44G, 44D), a wheel support (54G, 54D), a pivoting link (55) positioned between the guide wheel (44G, 44D) and the corresponding wheel support (54G, 54D).

4. Machining device according to Claim 3, **characterized in that** the machining head (32) includes at least one guide rail (62) that extends in the lateral direction (60) and that is fixed in relation to the chassis (38), the wheel supports (54G, 54D) being movable along said guide rail (62).

5. Machining device according to Claim 4, **characterized in that** the guide rail (62) has an inverted "T" section, and each wheel support (54G, 54D) has a slot with a "T" section that is identical, notwithstanding sliding clearance, to the "T" section of the guide rail (62) .

6. Machining device according to one of the preceding claims, **characterized in that** the machining head (32) includes a mechanism for synchronizing the movements of the guide wheels (44D, 44G) to ensure they are symmetrical in relation to the rotary tool (34).

7. Machining device according to claim 6, **characterized in that** the synchronization mechanism includes a pinion (64) and each guide wheel (44D, 44G) is mounted pivotingly on a wheel support (54D, 54G) that includes a rack (66D, 66G) that meshes with the pinion (64) and that extends in a direction parallel to the lateral direction (60), the racks (66D, 66G) being parallel and arranged facing one another on either side of the pinion (64).

8. Machining device according to one of the preceding claims, **characterized in that** the tool axis (36) and the wheel axes (48) are offset, the tool axis (36) being closer to the surface (18) of the cellular structure (10) than the wheel axes (48).

9. Machining device according to Claim 8, **characterized in that** the external diameter (D34) of the rotary tool (34) is less than the external diameter (D46) of the guide wheels (44D, 44G).

10. Machining device according to Claim 8 or 9, **characterized in that** it includes a wheel support (54D, 54G) for each guide wheel (44D, 44G), at least one wheel support positioned between the rotary tool (34) and a motor (40) provided to drive the rotary tool (34) in rotation, including a through hole (58).
